Europäisches Patentamt

European Patent Office

Office européen des brevets

(11) Publication number: **0 196 765**
A1

## EUROPEAN PATENT APPLICATION

(21) Application number: 86301290.2

(22) Date of filing: 24.02.86

(51) Int. Cl.⁴: **F 16 D 65/56**
**F 16 D 55/224**

(30) Priority: 15.03.85 GB 8506698

(43) Date of publication of application:
08.10.86 Bulletin 86/41

(84) Designated Contracting States:
DE FR GB IT

(71) Applicant: AUTOMOTIVE PRODUCTS PUBLIC LIMITED
COMPANY
Tachbrook Road
Leamington Spa Warwickshire CV31 3ER(GB)

(72) Inventor: Haines, William Ernest
39 St. Marys Close
Southam Warwickshire(GB)

(74) Representative: Cundy, Anthony Brian
Anthony Cundy & Company 384 Station Road Dorridge
Solihull West Midlands B93 8ES(GB)

(54) Brake actuator.

(57) An actuator for a brake comprises a piston and cylinder assembly 125, 124 with an adjustment mechanism to control movement of the piston 125 towards the end wall 119 of the cylinder bore 124. The adjustment mechanism includes a strut formed by screw and nut members 132, 135 having interengaging screw-threaded formations 136, 137 and means to effect relative rotation of the screw and nut members 132, 135 upon excessive movement of the piston 125 during fluid pressure operation of the actuator. The nut member 135 extends through the end wall 119 of the cylinder bore 124 and an external lever mechanism (156; 160) is provided to move the nut member 135 relative to the actuator body 122, to effect mechanical operation of the actuator.

./...

FIG 1.

## BRAKE ACTUATOR

This invention relates to an actuator for a brake, said actuator providing fluid pressure and mechanical means for moving a friction member into engagement with a rotatable element.

It is known, for example from GB 1355960 to provide an adjustable fluid pressure actuator in which a piston is movable in cylinder by fluid pressure to apply the brake and in which an adjustable length strut is provided to compensate for wear of the brake pads.

The adjustable strut comprises two components, a screw threaded stem held against axial movement and a screw threaded sleeve mounted on the stem for abutment with the piston to limit return movement of the piston.

According to one aspect of the present invention an actuator for a brake by means of which a friction member may be moved into engagement with a rotatable element comprises an actuator body defining a cylinder bore, an end wall closing one end of the bore and a piston slidably sealed within the bore closing the other end thereby defining a fluid-tight working chamber therebetween, an inlet being provided to said working chamber for connection to a source of fluid under pressure for fluid pressure operation of the actuator, an adjuster mechanism including a strut which acts between the end wall and the piston to control movement of the piston towards the end wall, the strut comprising a nut member having a screw-threaded bore and a screw member having a screw-threaded shank in threaded engagement with the screw-threaded bore, the nut member extending through the end wall and means being provided to effect movement of the nut member relative to the actuator body, for mechanical operation of the actuator.

Preferably, the adjuster mechanism is operative to extend the strut by rotation of the screw member in one direction relative to the nut member, in response to excessive movement of the piston away from the end wall under fluid pressure operation.

The screw member may be biased axially away from the nut member at least during excessive movement of the piston away from the end wall under fluid pressure operation, to cause rotation of the screw member relative to the nut member in one direction which will extend the strut, clutch means being provided to prevent relative rotation in the other direction.

Preferably, the clutch means comprises co-operating frusto-conical surfaces on the piston and the screw member, biased into frictional engagement by a spring.

The spring may conveniently act between respective abutments on the screw member and the piston.

Preferably, there is a lost motion connection between the piston and the end wall to allow a limited movement of the piston without adjustment occurring.

The lost motion connection may be provided by a clearance between the engaged screw threads of the nut and screw members.

Alternatively, the lost motion connection may be provided by allowing the nut member a limited axial movement relative to the end wall.

The piston may be mechanically moved away from the end wall by rotating the nut member relative to the screw member. Alternatively, the nut member may be moved axially to effect mechanical operation of the actuator.

The piston may co-operate with a thrust member for transmission of the braking load to the friction member, a ball and socket means being interposed between the piston and the thrust member.

Examples of the invention will be described with reference to the accompanying drawings of which:-

Figure 1 is a cross-section through a brake including a brake caliper assembly and a rotatable disc, the brake caliper assembly including an actuator according to the invention.

Figure 2 is a cross-section through a modified version of the brake actuator shown in Figure 1.

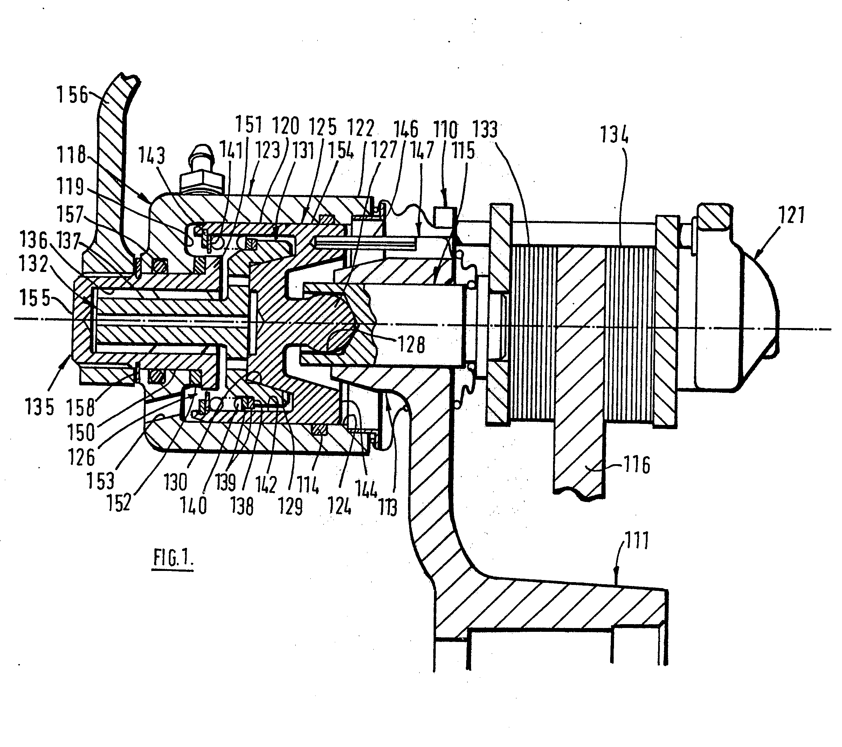

The brake shown in Figure 1 includes a brake caliper assembly 110 and a rotatable element in the form of a brake disc 116.

The brake caliper assembly 110 comprises a caliper 118, a pair of brake pads 133, 134 and a fixed support 111 to connect the caliper 118 to a fixed part of a vehicle (not shown).

The fixed support 111 has a boss 113 having a bore in which a thrust member 115 can slide freely. The thrust member 115 lies parallel to but offset from the axis of the disc 116. The caliper 118 comprises a generally rectangular structure incorporating two arms which extend across the periphery of the disc 116 and connect a reaction member 121 to the body 122 of an actuator 123. The body 122 defines a cylinder bore 124 closed at one end by an end wall 119 and at the other end by a piston 125 to form a working chamber 126 therebetween. The piston 125 is slidable away from the end wall 119 by hydraulic pressure admitted to the working chamber 126 through an inlet port 153. An hydraulic seal 114 located in a groove in the cylinder bore 124 prevents leakage of hydraulic fluid past the piston 125 with which it co-operates. The hydraulic seal 114 also retracts the piston 125 towards the end wall 119 when the hydraulic pressure in the working chamber 126 is reduced to zero.

The piston 125 comprises a tubular portion 120 and a crown 154. The tubular portion 120 has a cylindrical bore 142 closed at one end by the crown 154. The crown 154 has a frusto-conical surface 129 facing towards the end wall 119 and an end face 144 facing away from the end wall 119. On the end face 144 there is provided a ball-shaped projection 127 which co-operates with a recess 128 in the thrust member 115.

The ball shaped projection 127 and the recess 128 provide a ball and socket connection between the piston 125 and the thrust member 115. A pin 146 extends from a blind hole in the end face 144 and engages with a notch or groove 147 in the fixed support 111 to prevent rotation of the piston 125.

Return movement of the piston 125 towards the end wall 119 is limited by an adjustable strut acting between the end wall 119 and the piston 125 to provide a lost-motion connection therebetween.

The adjustable strut comprises a screw member 132 and a nut member 135.

The screw member 132 has a screw-threaded shank 137 and a head 131. The head 131 has an annular abutment surface 138 facing towards the end wall 119 and an internal frusto-conical surface 130 facing away from the end wall 119.

The nut member 135 has a tubular body portion 150 extending through the end wall 119 and a flange 151 for co-operation with a low-friction thrust washer 152 interposed between the flange 151 and the end wall 119. The tubular body portion 150 has a screw-threaded bore 136 closed at one end by an integral end cap 155. The outer surface of the tubular body portion 150 is splined near to said one end

for co-operation with the splined bore of a lever 156. The lever 156 is provided to mechanically rotate the nut member 135 for mechanical actuation of the brake. In the non-actuated condition the lever 156 will be held against a stop (not shown) by means of a pull-off spring (not shown), which will prevent rotation of the nut member 135, until a load is applied to the lever 156 moving it away from the stop. Axial movement of the nut member 135 relative to the end wall 119 is limited in one direction by abutment of the flange 151 against the low-friction thrust washer 152 and in the other direction by the abutment of a circlip 158 against the outer surface of the end wall 119. The circlip 158 is located in a circumferential groove in the outer surface of the tubular body portion 150. Hydraulic fluid leakage between the nut member 135 and the end wall 119 is prevented by a hydraulic seal 157.

The screw-threaded bore 136 of the nut member 135 is in threaded engagement with the screw-threaded shank 137, both screw threads being of a multistart quick thread type. Both the screw-threaded bore 136 and the screw-threaded shank 137 extend through the end wall 119 at least when the piston 125 is in the retracted position corresponding to the unworn condition of the brake pads 133, 134. There is an axial clearance between the co-operating screw threads of the nut and screw members 135 and 132 to provide a lost-motion connection between the piston 125 and the end wall 119.

The screw member 132 co-operates with the piston 125 by abutment between the two frusto-conical surfaces 129, 130 both of which converge towards the end wall 119 to provide a disengageable cone clutch means.

The two frusto-conical surfaces 129, 130 are biased into engagement by a compression spring 140 acting between the piston 125 and the screw member 132.

The spring 140 acts against an abutment washer 141, connected to the piston 125 by a circlip 143, at one end and against a pair of low-friction washers 139, interposed between the spring 140 and the annular abutment surface 138, at the other end.

Hydraulic operation of the brake is achieved by introducing fluid under pressure into the working chamber 126 through the inlet port 153, the hydraulic pressure displacing the piston 125 away from the end wall 119 towards the disc 116. The piston 125 thrusts through the thrust member 115 against the brake pad 133 located on the same side of the rotary disc 116 as the actuator 123. The brake pad 133 includes friction material which is pressed into frictional engagment with the disc 116.

Simultaneously, the reaction force on the end wall 119 urges the caliper 118 in the other direction so that the reaction member 121 forces the other brake pad 134 into frictional engagement with the disc 116.

The screw member 132 moves with the piston 125 until the clearance between the co-operating screw-threads of the nut and screw members 135 and 132 is exhausted. Provided that contact between the screw member 132 and the piston 125 is maintained the screw member 132 is prevented from rotation by the frictional resistance between the two frusto-conical surfaces 129 and 130.

If, however, the piston 125 moves an excessive distance away from the end wall 119, that is a distance greater than the clearance between the two co-operating screw-threads of the nut and screw members 135 and 132, the screw member 132 can no longer follow the piston 125. The two frusto-conical surfaces 129, 130 then no longer remain fully engaged but become partially separated. The partial separation of the two frusto-conical surfaces 129, 130 reduces the frictional resistance between them. Since the screw member 132 is biased axially away from the nut member 135 by the spring 140 during the excessive movement, the screw member 132 will rotate relative to the nut member 135 causing it to move axially towards the piston 125.

The screw member 132 continues to rotate under the effect of the spring 140 until full engagement between the two frusto-conical surfaces 129, 130 is restored, thereby taking up the excess movement of the piston 125 and establishing a new axial position of the screw member 132 relative to the nut member 135.

When subsequently the hydraulic pressure in the working chamber 126 is reduced to zero the piston 125 can return towards the end wall 119 under the influence of the hydraulic seal 114. This return movement of the piston 125 is limited by the clearance between the co-operating screw threads of the nut and screw members 135 and 132 due to the new axial position of the screw member 132 relative to the nut member 135.

To mechanically actuate the brake the lever 156 is angularly displaced in a brake applying direction causing rotation of the nut member 135 relative to the screw member 132, the latter being prevented from rotating by frictional engagement between the frusto-conical surfaces 129, 130. The relative rotation between the nut and screw members 135 and 132 causes the screw member 132 to be moved away from

0196765

the end wall 119 to displace the piston 125 towards the disc 116. The thrust from the screw member 132 is transmitted to the piston 125 through abutment of the two frusto-conical surfaces 128, 130. The reaction force from the end wall 119 is transferred to the nut member 135 through the low-friction thrust washer 152 and flange 151.

During mechanical operation of the actuator 123, the screw member 132 does not rotate and upon release of the lever 156, it is returned to the stop by the pull-off spring. There will consequently be no relative movement between the nut member 135 and screw member 132 and therefore there will be no adjustment of the adjustable strut.

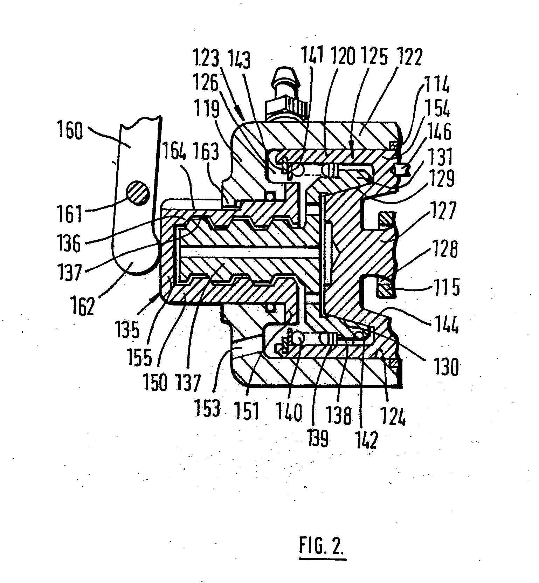

In the modified actuator shown in Figure 2, parts similar to those described with respect to Figure 1 have the same reference numerals.

In the modified version of the actuator 123, the tubular body portion 151 of the nut member 135 is slidably located through an aperture in the end wall 119, a lug 163 on the end wall 119 engaging in a longitudinal groove 164 in the body portion 150 in order to prevent relative rotation therebetween. A lever 160 is pivotted about pin 161, so that one end 162 bears against the end cap 155 of the nut member 135.

During hydraulic operation of the actuator, axial movement of the nut member 135 will be prevented by the fluid pressure acting on flange 151 and upon excessive movement of the piston 125, adjustment of the relative axial positions of the screw member 132 and nut member 135 will occur, as described with reference to Figure 1.

Mechanical operation of the actuator is achieved by pivoting lever 160 anticlockwise, as viewed in Figure 2. This will move the nut member 135 axially towards the piston 125 and this movement will be transmitted through the screw member 132, piston 125 and thrust member 115 to the brake pads. Upon release of the lever 160, a pull-off spring (not shown) will return it to the position illustrated in Figure 2 thus permitting the actuator 123 to return to the condition illustrated in Figure 2. As the nut member 135 is prevented from rotation by engagement of lug 163 in groove 164 and during mechanical operation the frusto-conical surfaces 129 and 130 will remain in frictional engagement thus preventing rotation of the screw member 132, there will be no adjustment of the adjustable strut.

The invention has so far been described solely with reference to a single pin sliding caliper of the type more fully described in our co-pending British Patent Application No. 84.28668. It is, however, not limited to use only in such a caliper and can be used in a wide range of disc brake caliper assemblies or drum brake actuators, where an adjustable fluid pressure/mechanical actuator is required.

Similarly the invention is not limited to the exact configuration shown in Figures 1 and 2. The frusto-conical surfaces may, for example, be reversed so that they both diverge towards the end wall. The lost-motion connection similarly could be provided not by a clearance between the two co-operating screw threads of the adjustable strut but by allowing the nut member a limited axial movement relative to the end wall. In the latter case the nut member is arranged such that no appreciable end load is applied to it by the fluid pressure. In the embodiment illustrated in Figure 2 this would require that other means be used to restrict axial movement of the nut member during fluid pressure operation of the actuator. For example, this could be achieved by means of a suitable lost-motion connection between the nut member and mechanical actuating lever. Such a mechanism could also be used to prevent rotation of the nut member in place of the lug and groove arrangement illustrated.

In addition, the ball and socket connection between the piston and the thrust member could be reversed, so that the piston has a recess to co-operate with a ball-shaped projection on one end of the thrust member.

## CLAIMS

1.     An actuator for a brake by means of which a friction member (133, 134)may be moved into engagement with a rotatable element (116), said actuator (123) comprising an actuator body (122) defining a cylinder bore (124), an end wall (119) closing one end of the bore (124) and a piston (125) slidably sealed within the bore (124) closing the other end thereby defining a fluid-tight working chamber (126) therebetween, an inlet (153) being provided to said working chamber (126) for connection to a source of fluid under pressure for fluid pressure operation of the actuator (123), an adjuster mechanism including a strut which acts between the end wall (119) and the piston (125) to control movement of the piston (125) towards the end wall (119), the strut comprising a nut member (135) having a screw-threaded bore (136) and screw member (132) having a screw-threaded shank (137) which is in threaded engagement with the screw-threaded bore (136), characterised in that the nut member (135) extends through the end wall (119) and means is provided to effect movement of the nut member (135) relative to the actuator body (122), for mechanical operation of the actuator (123).

2.     An actuator according to Claim 1 characterised in that the adjuster mechanism is operative to extend the strut (132. 135) in response to excessive movement of the piston (125) away from the end wall (119) under fluid pressure operation.

3. An actuator according to Claim 2 characterised in that the screw member (132) is biased axially away from the nut member (135), at least during excessive movement of the piston (125) away from the end wall (119) under fluid pressure operation, to cause rotation of the screw member (132) relative to the nut member (135) in one direction which will extend the strut (132, 135), clutch means being provided to prevent relative rotation in the other direction.

4. An actuator according to Claim 3 characterised in that the clutch means comprises co-operating frusto-conical surfaces (129, 130) on the piston (125)and the screw member (132).

5. An actuator according to Claim 4 characterised in that the frusto-conical surfaces (129, 130) are biased into frictional engagement by a spring (140).

6. An actuator according to Claim 5 characterised in that the spring (140) acts between the piston (125) and the screw member (132).

7.　　An actuator according to any one of the preceding claims characterised in that the nut member (135) is permitted a limited axial movement relative to the end wall (119) to provide a lost-motion connection between the piston (125) and the end wall (119).

8.　　An actuator according to any one of Claims 1 to 6 characterised in that a clearance is provided between the engaging screw threads of the nut and screw members (135, 132), so as to provide a lost-motion connection between the piston (125) and the end wall (119).

9.　　An actuator according to any one of the preceding claims characterised in that the nut member (135) is restricted axially with respect to the actuator body (122), means (156) being provided for mechanical rotation of the nut member (135) relative to the screw member (132) to move the piston (125) away from the end wall (119).

10.　　An actuator according to any one of Claims 1 to 8 characterised in that the nut member (135) is restricted rotatably with respect to the actuator body (122), means (160) being provided for mechanical movement of the nut member (135) axially relative to the body member (122), to move the piston (125) away from the end wall (119) and means (151) being provided to restrict movement of the nut member (135) axially relative to the actuator body (122) during fluid pressure operation of the actuator (123).

FIG.1.

1 | 2

FIG. 2.

**European Patent Office**

**EUROPEAN SEARCH REPORT**

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| A | US-A-3 688 875 (DE HOFF et al.)<br>* Abstract; column 2, lines 57-68; figure 1 * | 1-9 | F 16 D 65/56<br>F 16 D 55/224 |
| A | DE-A-1 475 496 (ALFRED TEVES GmbH)<br>* Page 3, paragraph 2 - page 4, paragraph 1; figure 1 * | 1-3,10 | |
| A,D | GB-A-1 355 960 (AUTOMOTIVE PRODUCTS LTD.)<br>* Page 2, line 29 - page 3, line 49; figure 2 * | 1-9 | |

| TECHNICAL FIELDS SEARCHED (Int. Cl 4) |
|---|
| F 16 D 55/00<br>F 16 D 65/00 |

The present search report has been drawn up for all claims

| Place of search | Date of completion of the search | Examiner |
|---|---|---|
| THE HAGUE | 20-06-1986 | BRAEMS C.G.I. |